# EUROPÄISCHE PATENTSCHRIFT

(11) **EP 0 427 036 B1**
(45) Veröffentlichungstag und Bekanntmachung des Hinweises auf die Patenterteilung: **10.01.1996**
(21) Anmeldenummer: 90120180.6
(22) Anmeldetag: 20.10.1990
(51) Int. Cl.: G06F 3/023, B41J 5/10

(54) **Tastatureinheit zur Steuerung von Prozessoreinheiten**
Keyboard for the control of processor units
Clavier pour commande d'unités à processeur

(30) Priorität: 01.11.1989 CH 3952/89
(43) Veröffentlichungstag der Anmeldung: 15.05.1991
(73) Patentinhaber: Niklsbacher, Ferdinand Nande, SI-61001 Ljubljana (SI)
(72) Erfinder: Niklsbacher, Ferdinand Nande, SI-61001 Ljubljana (SI)
(74) Vertreter: Althoff, Gerhard

(56) Entgegenhaltungen:
- EP-A- 0 050 565
- EP-A- 0 279 553
- WO-A-82/04151
- GB-A- 2 131 746

## Beschreibung

Die Erfindung bezieht sich auf eine Tastatureinheit zur Steuerung einer damit in Wirkverbindung stehenden Prozessoreinheit, mit mindestens einem auf einer feststehenden Grundplatte gelagerten und relativ dazu verschiebbaren Kopfstück, welches auf der der Grundplatte abgewandten Seite eine Auflagefläche für die Hand einer Bedienungsperson sowie eine Anzahl Tasten aufweist, die im Abstand zueinander im Bereich der Auflagefläche angeordnet und jeweils von den Fingern der Hand betätigbar sind.

Zur Steuerung von Prozessoreinheiten, Handlinggeräten, Industrierobotern oder dergleichen sind entsprechend ausgebildete Tastatureinheiten (Keyboards) bekannt, welche in ihren Anwendungsmöglichkeiten stark begrenzt und somit für die heutigen komplexen Systeme nicht mehr geeignet sind. Ein weiterer Nachteil besteht darin, dass bei den bekannten Tastatureinheiten der Arm sowie die Hand der jeweiligen Bedienungsperson in der Arbeitsstellung gegenüber der normalen Körperhaltung nolens volens eine anatomisch abnorme Haltung einnimmt, was in bekannter Weise zu den schmerzhaften Verspannungen und Verkrampfungen und somit vielfach zu chronischen Muskelentzündungen, insbesondere im Bereich des Oberkörpers sowie im Arm führt.

Aus der GB-A 2 131 746 ist eine über eine Leitung mit einem Display in Form einer LCD-Anzeige (Liquid Cristal Display) in Verbindung stehende Tastatureinheit bekannt, bei welcher ein mittels Rollen oder dergleichen auf einer Unterlage seitlich verschiebbar gelagertes, etwa gehäuseförmig ausgebildetes und mit eingebauten sowie die Symbole der LCD-Anzeige aktivierenden Schaltelementen versehenes Kopfstück entweder zur Aufnahme einer ersten Tastengruppe eine etwa ebenflächige Handauflage sowie zur Aufnahme einer zugeordneten zweiten und dritten Tastengruppe je eine zu beiden Seiten der Handauflage relativ dazu abgesetzt ausgebildete Vertiefung aufweist, oder aber mit einem um eine etwa vertikale Achse drehbaren, kalottenförmig ausgebildeten Kopfstück versehen ist, an welchem in Umfangsrichtung der gewölbt ausgebildeten Auflagefläche verteilt zueinander angeordnete Vertiefungen zur Aufnahme der einzelnen Tastengruppen angeordnet sind.

Der Erfindung liegt die Aufgabe zugrunde, für eine Tastatureinheit gemäss der im Oberbegriff des Patentanspruchs 1 genannten Gattung ein Kopfstück zu schaffen, mittels welchem unter Beibehaltung einer vielfachen Positionsänderung sowie einer ergonomischen Hand- und Unterarmführung einerseits eine problemlose Betätigung der einzelnen Tasten und andererseits eine exakte Aktivierung des momentan von der jeweiligen Taste angesteuerten Symbols gewährleistet ist.

Diese Aufgabe wird erfindungsgemäss dadurch gelöst, dass das Kopfstück an einer etwa vertikal zur Auflagefläche orientierten Stirnseite eine erste Tastengruppe mit von den einzelnen Fingern der jeweiligen Hand zu betätigenden Tasten sowie an einer ebenfalls vertikal zur Auflagefläche orientierten Seitenfläche mindestens eine von dem Daumen der Hand zu betätigende Taste aufweist, wobei das Kopfstück für eine vielfache Belegung der einzelnen Tasten in mehrere, in Längsrichtung des Unterarms der Bedienungsperson orientierte Schritte sowie in mehrere etwa quer dazu orientierte Schritte relativ zu mindestens einem in einzelne Felder unterteilten und der Grundplatte zugeordneten Belegungsfeld derart verschiebbar ist, dass die einzelnen Felder des momentan von dem Kopfstück beaufschlagten Belegungsfeldes durch Betätigung der jeweiligen Taste aktivierbar sind.

Die spezielle Ausgestaltung des Kopfstücks sowie die anatomisch den einzelnen Fingern der menschlichen Hand stirnseitig angeordneten Tasten gewährleisten bei sämtlichen in Längsrichtung des Unterarms der Bedienungsperson und im wesentlichen quer dazu orientierten Schiebebewegung des Kopfstücks sowie bei Betätigung der entsprechenden Taste (Druckkontakt) eine absolut ergonomische Führung der jeweiligen Hand, ohne dass dabei die Hand von dem jeweiligen Kopfstück abgehoben beziehungsweise eine Lageänderung vorgenommen werden muss. Ein besonderer Vorteil besteht weiterhin darin, dass die Tastatureinheit mit dem erfindungsgemässen Kopfstück auch von Personen bedient werden kann, die in bezug auf durchzuführende Bewegungsabläufe erheblich behindert sind.

Die stirnseitig an dem Kopfstück zur Eingabe alphanumerischer Buchstaben und/oder Ziffern, Symbolen oder dergleichen angeordnete Tastengruppe umfasst lediglich vier Tasten, welche etwa analog der anatomischen Anordnung und Bewegung des einzelnen Fingers der menschlichen Hand beabstandet sind, so dass die einzelne Taste zwangsläufig von ein und demselben Finger betätigt wird und somit unbeabsichtigte Belegungsfehler weitgehend ausgeschlossen sind.

Bei einem weiteren Ausführungsbeispiel des Kopfstücks kann der ersten Tastengruppe eine korrespondierende zweite Tastengruppe zugeordnet werden, bei welcher die einzelne Taste ebenfalls von ein und demselben Finger betätigt wird, ohne dass dabei die momentane Lage (Position) der auf der Auflagefläche des Kopfstücks aufliegenden Hand verändert werden muss. Die Betätigung der einzelnen Taste der zweiten Tastengruppe erfolgt im wesentlichen mit gestrecktem Finger.

Das Kopfstück wird zur Ansteuerung der einzelnen Felder und Betätigung der jeweiligen Taste im wesentlichen analog der Koordinaten eines an sich bekannten Koordinatensystems relativ zu dem jeweils an der Grundplatte angeordneten Belegungsfeld verschoben, wobei durch die Längsrichtung des Unterarms orientierte Bewegung des Kopfstücks sowie durch die etwa quer dazu orientierte Bewegung das einzelne, gewünschte Feld angesteuert und durch Betätigung der jeweiligen Taste beispielsweise zur Erzeugung eines Auslösesignals aktiviert wird.

Weitere Merkmale der Erfindung ergeben sich aus der folgenden Beschreibung in Verbindung mit der Zeichnung und den Patentansprüchen.

Die Erfindung wird nachstehend in Verbindung mit der Zeichnung beschrieben. Es zeigt:
- Fig. 1: eine in Seitenansicht dargestellte Tastatureinheit,
- Fig. 2: die in Ansicht gemäss Pfeilrichtung A dargestellte Tastatureinheit gemäss Fig.1,
- Fig. 3: ein erstes, für die rechte Hand ausgebildetes Belegungsfeld für die Tastatureinheit gemäss Fig.1 und 2,
- Fig. 4: ein zweites, für die rechte Hand ausgebildete Belegungsfeld für die Tastatureinheit gemäss Fig.1 und 2,
- Fig. 5: ein drittes, für die rechte Hand ausgebildetes Belegungsfeld für die Tastatureinheit gemäss Fig.1 und 2, und
- Fig. 6: eine für die linke und rechte Hand ausgebildete und aus zwei Belegungsfeldern gebildete Belegungs einheit für die Tastatureinheit gemäss Fig.1 und 2.

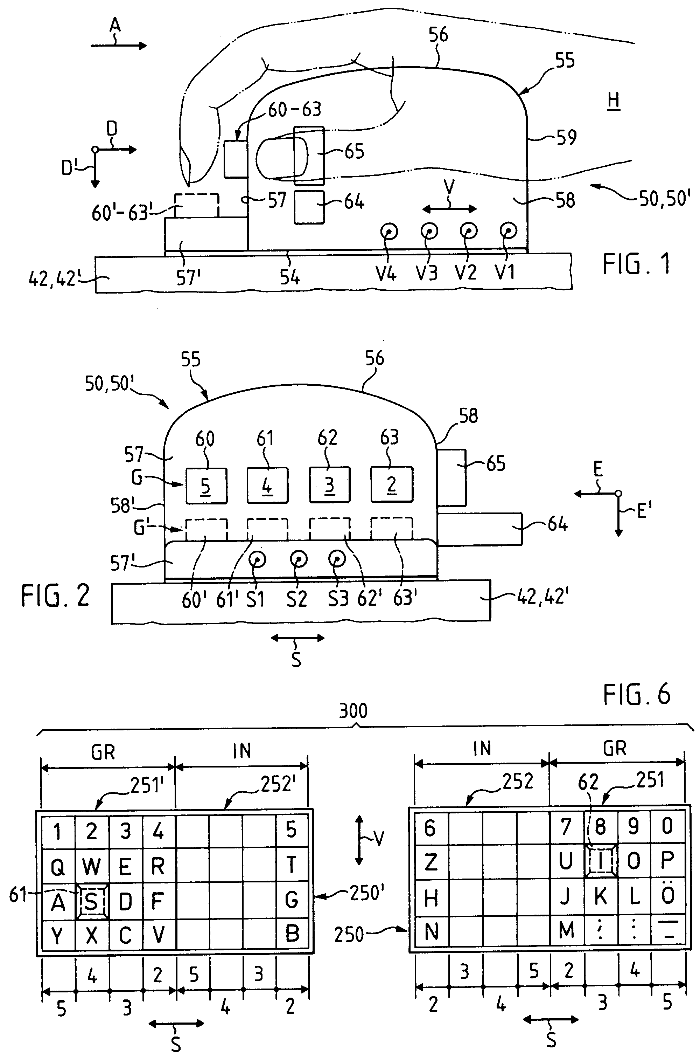

Fig.1 zeigt in Seitenansicht eine Tastatureinheit 50, welche im dargestellten Ausführungsbeispiel für die durch die strichpunktierten Linien schematisch dargestellte, rechte Hand H einer Bedienungsperson ausgebildet ist. Eine nicht näher dargestellte und für die linke Hand der Bedienungsperson vorgesehene Tastatureinheit 50' ist analog ausgebildet. Die beiden Tastatureinheiten 50 und 50' sind zur Steuerung einer nicht dargestellten Prozessoreinheit oder dergleichen ausgebildet, wobei nachstehend die eine Tastatureinheit 50 beschrieben wird.

Die mit entsprechend angeordneten Tasten versehene Tastatureinheit 50 umfasst im wesentlichen ein etwa knaufartig ausgebildetes Kopfstück 55, welches eine auf der der inneren Handfläche der Hand H zugewandten Seite entsprechend ausgebildete Auflagefläche 56, eine mit einem angeformten Absatzstück 57' versehene Stirnseite 57, zwei Seitenflächen 58,58' sowie eine Rückseite 59 aufweist.

An der Stirnseite 57 des Kopfstücks 55 sind mehrere im Abstand zueinander angeordnete und eine erste Tastengruppe G bildende Tasten 60, 61,62 und 63 vorgesehen, welche durch den von dem entsprechend zugeordneten Finger ausgeübten und in Pfeilrichtung D orientierten Druck betätigbar sind. Korrespondierend zu den Tasten 60,61,62 und 63 kann an dem stirnseitigen Absatzstück 57' eine zweite, die Tasten 60',61',62' und 63' umfassende Tastengruppe angeordnet werden, welche durch den in Pfeilrichtung D' orientierten Druck des entsprechenden Fingers betätigbar sind. An der einen Seitenfläche 58 des Kopfstücks 55 sind zwei weitere Tasten 64 und 65 angeordnet, wobei die eine, in Pfeilrichtung E betätigbare Taste 65 die Funktion einer Umschalttaste und die andere, in Pfeilrichtung E' betätigbare Taste 64 die Funktion einer Leertaste hat. Die entsprechend zueinander angeordneten Tasten 64,65 werden bei der Tastatureinheit 50 von dem nicht näher bezeichneten Daumen der rechten Hand H und bei der nicht dargestellten Tastatureinheit 50' von dem Daumen der linken Hand der Bedienungsperson betätigt (Fig.1,2).

Das Kopfstück 55 der Tastatureinheit 50 oder 50' ist auf der als Trägerelement ausgebildeten Grundplatte 42 oder 42' zugewandten Unterseite 54 mit nicht dargestellten Führungselementen versehen, welche Führungselemente derart ausgebildet und mit der Grundplatte 42 oder 42' wirkverbunden sind, dass die einzelne Tastatureinheit 50 oder 50' durch eine in Pfeilrichtung V orientierte Bewegung (Fig.1) und in eine in Pfeilrichtung S orientierte Bewegung (Fig.2) verschiebbar ist. Die in Pfeilrichtung V sowie in Pfeilrichtung S orientierten Bewegungen der Tastatureinheit 50, 50' erfolgen dabei relativ zu der jeweiligen Grundplatte 42 oder 42' beziehungs weise relativ zu einem der Grundplatte 42,42' zugeordneten Belegungs Feld 250,255,260 oder 300.

Die in Pfeilrichtung V orientierte Bewegung ist beispielsweise in vier, gerasterte Schritte V1,V2,V3 und V4 (Fig.1) unterteilt, wobei die Stellung V2 beispielsweise als Grundoder Ausgangsstellung vorgesehen werden kann. Es besteht jedoch auch die Möglichkeit nur drei oder aber noch weitere, gerasterte Schritte vorzusehen.

Wie in Fig.2 dargestellt, ist die in Pfeilrichtung S orientierte Schiebebewegung vorzugsweise in drei, ebenfalls gerasterte Schritte S1,S2 und S3 unterteilt, wobei die mittlere Stellung S2 beispielsweise als Grund- oder Ausgangsstellung vorgesehen ist.

Fig.2 zeigt die ohne die Hand H in Ansicht gemäss Pfeilrichtung A (Fig.1) dargestellte Tastatureinheit 50 und man erkennt die an der Stirnseite 57 des Kopfstücks 55 angeordneten Tasten 60,61,62 und 63, die korrespondierend dazu am stirnseifigen Absatzstück 57' angeordneten Tasten 60',61',62' und 63' sowie die an der Seitenfläche 58 angeordneten Tasten 64 und 65.

Die einzelnen, zur besseren Verdeutlichung für den Anschlag des betreffenden Fingers mit Zahlen 2,3,4 und 5 markierten Tasten 60 bis 63 sowie 60' bis 63' sind entsprechend den Fingern der menschlichen Hand angeordnet. Die Tasten 60 und 60' werden dabei von dem kleinen Finger 5, die Tasten 61 und 61' von dem Ringfinger 4, die Tasten 62 und 62' von dem Mittelfinger 3 und die Tasten 63 und 63' von dem Zeigefinger 2 betätigt. Die Tasten 60 bis 63 werden, wie in Fig.l dargestellt, durch leichten Druck des entsprechenden Fingers in Pfeilrichtung D und die Tasten 60' bis 63' durch geringes Strecken des entsprechenden Fingers mit leichtem Druck in Pfeilrichtung D' betätigt.

Die seitlich am Kopfstück 55 angeordnete Umschalttaste 65 wird, wie in Fig.2 dargestellt, durch leichten Druck des Daumens in Pfeilrichtung E und die Leertaste 64 durch leichten Druck des Daumens in Pfeilrichtung E' betätigt.

In dem vorzugsweise gehäuseartig ausgebildeten Kopfstück 55 der einzelnen Tastatureinheit 50 oder 50' sind mit den Tasten 60 bis 63 und 60' bis 63' sowie 64 und 65 in Wirkverbindung stehende Kontaktelemente (nicht dargestellt) sowie eine nicht dargestellte Schaltungsanordnung vorgesehen. Durch Betätigung der einzelnen Taste in bestimmter Bewegungsposition des Kopfstücks 55 in bezug zu der feststehenden Grundplatte 42,42' beziehungsweise zu dem zugeordneten Belegungsfeld 250,255,260 oder 300 wird diese Position beispielsweise berührungslos, z.B. elektro-optisch (optronisch), elektromagnetisch, elektromechanisch oder aber rein mechanisch abgetastet und die dabei ermittelten Signale in digitale Funktionen umgewandelt.

Die Funktionen der Tasten 60 bis 63 beziehungsweise 60' bis 63' in Verbindung mit den entsprechend in Pfeilrichtung V und Pfeilrichtung S orientierten Bewegungen sowie die Funktionen der beiden Tasten 64,65 in Verbindung mit dem entsprechend ausgebildeten Belegungsfeld 250,255,260 oder 300 werden nachstehend beschrieben:

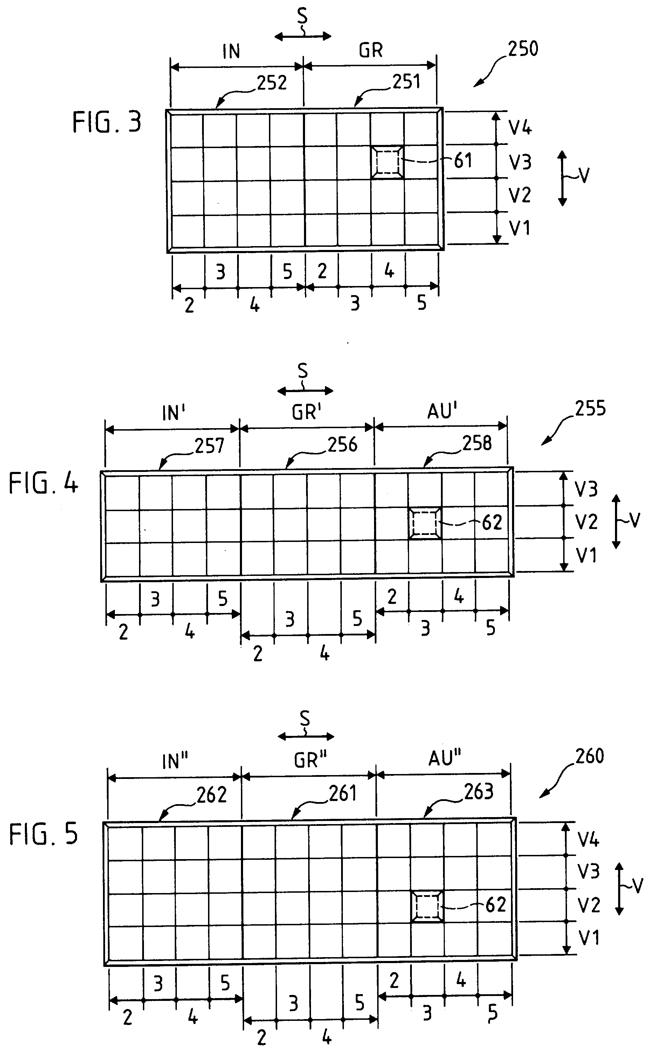

Fig.3 zeigt als erste Variante das für die rechte Hand ausgebildete und in der Gesamtheit mit 250 bezeichnete Belegungsfeld für die Tastatureinheit 50. Das Belegungsfeld 250 ist in ein erstes Teilstück 251 und in ein zweites Teilstück 252 unterteilt, wobei das erste Teilstück 251 einer Grundstellung GR und das zweite Teilstück 252 einer Innenstellung IN entspricht. Bei dem Belegungsfeld 250 können die einzelnen Tasten 60 bis 63 und 60' bis 63' sowie 64 und 65 einerseits durch die in Pfeilrichtung V orientierte, gerasterte Schiebebewegung der Tastatureinheit 50 entsprechend der Schritte V1 bis V4 und andererseits durch die quer dazu in Pfeilrichtung S orientierte, gerasterte Schiebebewegung der Tastatureinheit 50, wahlweise am Teilstück 251 oder am Teilstück 252 betätigt werden.

Das Belegungsfeld 250 umfasst, wie in Fig.3 dargestellt, zweiunddreissig, nicht bezeichnete Feldfunktionen, welche entsprechend der Belegung durch die einzelnen Finger der Hand H in einzelne, nachstehend beschriebene Felder 2 bis 5 unterteilt sind. In Pfeilrichtung V gesehen sind mit 2 die Felder für die Taste 63 des Zeigefingers, mit 3 die Felder für die Taste 62 des Mittelfingers, mit 4 die Felder für die Taste 61 des Ringfingers und mit 5 die Felder für die Taste 60 des kleinen Fingers bezeichnet. Mittels der beiden, vom Daumen der Hand H betätigbaren Tasten 64 und 65 (Fig.1,2) können die entsprechend belegten Felder 2 bis 5 beispielsweise für die Gross- oder Kleinschreibung umgeschaltet und aktiviert werden.

Fig.4 zeigt als zweite Variante das ebenfalls für die rechte Hand ausgebildete Belegungsfeld 255 für die Tastatureinheit 50 gemäss Fig.1 und Fig.2.

Abweichend von dem Belegungsfeld 250 gemäss Fig.3 ist bei dieser Variante das Belegungsfeld 255 in drei Teilstücke 256,257 und 258 unterteilt, wobei das mittlere Teilstück 256 einer Grundstellung GR', das Teilstück 257 der Innenstellung IN' und das Teilstück 258 der Aussenstellung AU' entspricht. Bei dem Belegungsfeld 255 können die einzelnen Tasten 60 bis 63 und 60' bis 63' sowie 64 und 65 einerseits durch die in Pfeilrichtung V orientierte gerasterte Schiebebewegung der Tastatureinheit 50 entsprechend der Schritte V1 bis V3 und andererseits durch die in Pfeilrichtung S orientierte, gerasterte Schiebebewegung der Tastatureinheit 50, wahlweise am Teilstück 256 oder am Teilstück 257 oder aber am Teilstück 258 betätigt werden.

Das Belegungsfeld 255 umfasst, wie in Fig.4 dargestellt, sechsunddreissig, nicht bezeichnete Feldfunktionen, welche entsprechend der vorstehend anhand von Fig.3 beschriebenen Belegung durch die einzelnen Finger der Hand aktivierbar und durch die Tasten 64,65 entsprechend für die Gross-oder Kleinschreibung umschaltbar sind.

Fig.5 zeigt als dritte Variante das ebenfalls für die rechte Hand ausgebildete Belegungsfeld 260 für die Tastatureinheit 50 gemäss Fig.1 und Fig.2.

Abweichend von dem Belegungsfeld 250 gemäss Fig.4 ist bei dieser Variante das Belegungsfeld 260 in drei Teilstücke 261,262 und 263 unterteilt, wobei das mittlere Teilstück 261 einer Grundstellung GR", das Teilstück 262 der Innenstellung IN" und das Teilstück 263 der Aussenstellung AU' entspricht. Bei dem Belegungsfeld 260 können die einzelnen Tasten 60 bis 63 und 60' bis 63' sowie 64 und 65 einerseits durch die in Pfeilrichtung V orientierte gerasterte Schiebebewegung der Tastatureinheit 50 entsprechend der Schritte V1 bis V4 und andererseits durch die in Pfeilrichtung S orientierte, gerasterte Schiebebewegung der Tastatureinheit 50, wahlweise am Teilstück 261 oder am Teilstück 262 oder aber am Teilstück 263 betätigt werden.

Das Belegungsfeld 260 umfasst, wie in Fig.5 dargestellt, achtundvierzig, nicht bezeichnete Feldfunktionen, welche entsprechend der vorstehend anhand von Fig.3 beschriebenen Belegung durch die einzelnen Finger der Hand H aktivierbar und durch die Tasten 64,65 entsprechend für die Gross-oder Kleinschreibung umschaltbar sind.

Fig.6 zeigt als weiteres Ausführungsbeispiel das in der Gesamtheit mit 300 bezeichnete Belegungsfeld für die beiden Tastatureinheiten 50 und 50'. Das Belegungsfeld 300 umfasst das eine für die rechte Hand ausgebildete Belegungfeld 250 mit den beiden Teilstücken 251 und 252 sowie ein analog ausgebildetes Belegungsfeld 250' mit den entsprechenden Teilstücken 251' und 252' für die linke Hand. Bei diesem Ausführungsbeispiel sind zur Verdeutlichung einige von den Tasten 60 bis 63 beziehungsweise von den Tasten 60' bis 63' zu aktivierende Felder 2 bis 5 mit Zahlen und Typen gekennzeichnet. Die für die Aktivierung der einzelnen Felder 2 bis 5 erforderliche Schiebebewegung der jeweiligen Tastatureinheit 50,50' (nicht dargestellt) in Pfeilrichtung V und S erfolgt dabei analog der vorstehend in Verbindung mit Fig.3 beschriebenen Bewegungen. Die Feldfunktionen des Belegungsfelds 300 sind im wesentlichen analog der vorstehend anhand von Fig.3 beschriebenen Belegung durch die einzelnen Finger der Hand H aktivierbar.

An dieser Stelle sei darauf hingewiesen, dass die einzelnen Belegungsfelder 250,255 und 260 für die Tastatureinheit 50,50' (Fig.1,2) miteinander kombinierbar sind.

Bei dem aus den Belegungsfeldern 250 oder 255 oder 260 gebildeten Belegungsfeld 300 wird beim Schreiben eines Buchstabens (TYPEN), einer Ziffer oder dergleichen zuerst die Tastatureinheit 50 oder 50' durch eine Seiten-/Rück- /oder Vorwärtsbewegung in die für die Aktivierung des jeweiligen Feldes 2 bis 5 entsprechende Position gebracht und anschliessend die entsprechende Taste 60 bis 63 beziehungsweise 60' bis 63' durch leichtes Krümmen beziehungsweise Strecken (Drücken) des entsprechenden Fingers betätigt. Die erforderlichen Leer- und Zeilenschaltungen sowie weitere Spezialbefehle (Tabulatorsprung etc.) werden durch die vom Daumen der Hand H betätigbaren Tasten 64 und 65 ausgelöst.

Durch die zweckmässigen gerasterten Vorwärts-/Rückwärtsund/oder Seitenbewegungen der einzelnen Tastatureinheit 50 oder 50' relativ zu dem jeweiligen der Grundplatte 42,42' zugeordneten Belegungsfeld 250,255,260 oder 300 sind manigfaltige Belegungen der Felder 2 bis 5 möglich, so dass auch mit nur einer der beiden Tastatureinheit en 50,50' eine vollständige, beispielsweise von einem Invaliden mit nur einem Arm, Belegung der Felder 2 bis 5 erreichbar ist.

Die spezielle Tastatureinheit 50 oder 50' kann aufgrund der umfassenden Belegungsmöglichkeiten der Felder 2 bis 5 auch zur Steuerung von komplexen Systemen, beispielsweise zur Steuerung von Handling geräten, Industrie robotern oder dergleichen verwendet werden und hat somit einen nahezu unbegrenzten Anwendungsbereich.

## Patentansprüche

1. Tastatureinheit zur Steuerung einer damit in Wirkverbindung stehenden Prozessoreinheit, mit mindestens einem auf einer feststehenden Grundplatte gelagerten und relativ dazu verschiebbaren Kopfstück (55), welches auf der der Grundplatte abgewandten Seite eine Auflagefläche (56) für die Hand (H) einer Bedienungsperson sowie eine Anzahl Tasten aufweist, die im Abstand zueinander im Bereich der Auflagefläche (56) angeordnet und jeweils von den Fingern der Hand (H) betätigbar sind, **dadurch gekennzeichnet**, dass das Kopfstück (55) an einer etwa vertikal zur Auflagefläche (56) orientierten Stirnseite (57) eine erste Tastengruppe (G) mit von den einzelnen Fingern der jeweiligen Hand (H) zu betätigenden Tasten (60,61,62,63) sowie an einer ebenfalls vertikal zur Auflagefläche (56) orientierten Seitenfläche (58,58') mindestens eine von dem Daumen der Hand (H) zu betätigende Taste (65) aufweist, wobei das Kopfstück (55) für eine vielfache Belegung der einzelnen Tasten (60,61,62,63) in mehrere, in Längsrichtung des Unterarms der Bedienungsperson orientierte Schritte (V) sowie in mehrere etwa quer dazu orientierte Schritte (S) relativ zu mindestens einem in einzelne Felder (2 bis 5) unterteilten und der Grundplatte (42,42') zugeordneten Belegungsfeld (250;255;260;300) derart verschiebbar ist, dass die einzelnen Felder des momentan von dem Kopfstück beaufschlagten Belegungsfeldes durch Betätigung der jeweiligen Taste aktivierbar sind.

2. Tastatureinheit nach Anspruch 1, **dadurch gekennzeichnet**, dass die relativ zu dem jeweiligen Belegungsfeld (250;255; 260;300) vor- oder rückwärts und/oder quer dazu orientierte Schiebebewegung (V und S) des Kopfstücks (55) in mehrere gerasterte Schritte (V1,V2,V3,V4 und S1,S2,S3) unterteilt ist, wobei die einzelnen Felder (2 bis 5) des momentan beaufschlagten Belegungsfeldes durch Betätigung der jeweiligen Taste (60,61,62,63) des Kopfstücks elektrooptisch, elektromagnetisch oder elektromechanisch aktivierbar sind.

3. Tastatureinheit nach Anspruch 1, **dadurch gekennzeichnet**, dass das Kopfstück (55) ein etwa rechtwinklig zu der Stirnseite (57) angeordnetes Absatzstück (57') aufweist, an welchem korrespondierend zu der an der Stirnseite (57) angeordneten ersten Tastengruppe (G) eine zweite Tastengruppe (G') mit mehreren Tasten (60',61',62',63') angeordnet ist.

4. Tastatureinheit nach den Ansprüchen 2 und 3, **dadurch gekennzeichnet** , dass mit der jeweiligen Schrittposition des Kopfstücks (55;55') in Abhängigkeit der einzelnen, in der jeweiligen Position zu betätigenden Taste (60,61,62,63 und 60',61',62',63') ein elektrisches Signal erzeugt wird, welches durch entsprechend zugeordnete Mittel in eine digitale Funktion umwandelbar ist.

5. Tastatureinheit nach den Ansprüchen 1 und 3, **dadurch gekennzeichnet** , dass mit den einzelnen Tasten (60,61,62,63 und 60',61',62',63') der ersten und der zweiten Tastengruppe (G und G') auf dem jeweiligen Belegungsfeld (250;255;260;300) Buchstaben- und/oder Ziffernfunktionen beziehungsweise Symbolfunktionen aktivierbar sind.

6. Tastatureinheit nach Anspruch 1, **dadurch gekennzeichnet**, dass das Kopfstück (55) an der dem Daumen der Hand (H) zugeordneten Seitenfläche (58,58') eine korrespondierend zu der ersten Taste (65) angeordnete zweite Taste (64) aufweist.

7. Tastatureinheit nach den Ansprüchen 1 und 6, **dadurch gekennzeichnet** , dass mittels der ersten und zweiten Taste (65, 64) des Kopfstücks (55;55') eine Umschalt- und Leerschaltfunktion für die auf den einzelnen Feldern (2 bis 5) des Belegungsfeldes (250;255;260;300) angezeigten Buchstaben, Ziffern oder Symbole aktivierbar ist.

8. Tastatureinheit nach Anspruch 1, **dadurch gekennzeichnet**, dass das Belegungsfeld (300) in zwei im Abstand zueinander auf der Grundplatte (42;42') angeordnete und je mit einem zugeordneten Kopfstück (50;50') in Wirkverbindung stehende Teilstücke (250;250') unterteilt ist.

9. Tastatureinheit nach Anspruch 1, **dadurch gekennzeichnet**, dass die jeweils mit mindestens einem Belegungsfeld (250;255;260;300) versehene Grundplatte (42;42') sowie das daran angeordnete relativ dazu verschiebbare Kopfstück (55;55') zusammen eine Baueinheit bilden.

10. Tastatureinheit nach den Ansprüchen 1 bis 10, **dadurch** **gekennzeichnet**, dass das Kopfstück (55;55') etwa knauf förmig ausgebildet und die daran angeformte Auflagefläche (56) etwa der inneren Handfläche der Hand (H) entsprechend nach aussen gewölbt ausgebildet ist.

## Claims

1. Keyboard for controlling a processor unit cooperating therewith, with at least one headpiece (55) which is mounted on a stationary base plate, is displaceable relative thereto and, on the side remote from the base plate, has a contact face (56) for the hand (H) of an operator as well as a number of keys arranged with mutual spacing in the region of the contact face (56) and actuable by the respective fingers of the hand (H), characterized in that the headpiece (55) has, on an end face (57) orientated substantially vertically relative to the contact face (56), a first group of keys (G) with keys (60, 61, 62, 63) to be actuated by the individual fingers of the respective hand (H) and, on a lateral face (58, 58') also orientated vertically relative to the contact face (56), at least one key (65) to be actuated by the thumb of the hand (H), the headpiece (55) being displaceable for multiple occupancy of the individual keys (60, 61, 62, 63) into several steps (V) orientated in the longitudinal direction of the operator's lower arm and into several steps (S) orientated substantially transversely thereto relative to at least one occupancy field (250; 255; 260; 300) divided into individual fields (2 to 5) and allocated to the base plate (42, 42') in such a way that the individual fields of the occupancy field instantaneously loaded by the headpiece can be activated by actuating the respective key.

2. Keyboard according to claim 1, characterized in that the sliding movement (V and S) of the headpiece (55) orientated forwardly or backwardly relative to the respective occupancy field (250; 255; 260; 300) and/or orientated transversely thereto is divided into several rastered steps (V1, V2, V3, V4 and S1, S2, S3), the individual fields (2 to 5) of the instantaneously loaded occupancy field being activatable electrooptically, electromagnetically or electromechanically by actuation of the respective key (60, 61, 62, 63) of the headpiece.

3. Keyboard according to claim 1, characterized in that the headpiece (55) has a shoulder piece (57') which is arranged substantially at right angles to the end face (57) and on which a second key group (G') with several keys (60', 61', 62', 63') corresponding to the first key group (G) arranged on the end face (57) is arranged.

4. Keyboard according to claims 2 and 3, characterized in that an electric signal which can be converted by appropriately allocated means into a digital function is produced by the respective step position of the headpiece (55; 55') as a function of the individual key (60, 61, 62, 63 and 60', 61', 62', 63') to be actuated in the respective position.

5. Keyboard according to claims 1 and 3, characterized in that letter and/or number functions or symbol functions are activatable by the individual keys (60, 61, 62, 63 and 60', 61', 62' 63') of the first and second key group (G and G') on the respective occupancy field (250; 255; 260; 300).

6. Keyboard according to claim 1, characterized in that the headpiece (55) has a second key (64) arranged to correspond to the first key (65) on the lateral face (58, 58') allocated to the thumb of the hand (H).

7. Keyboard according to claims 1 and 6, characterized in that a shift and space function for the letters, numbers or symbols displayed on the individual fields (2 to 5) of the occupancy field (250; 255; 260; 300) is activatable by means of the first and second key (65, 64) of the headpiece (55; 55').

8. Keyboard according to claim 1, characterized in that the occupancy field (300) is divided into two portions (250; 250') arranged with mutual spacing on the base plate (42; 42') and each cooperating with an associated headpiece (50; 50').

9. Keyboard according to claim 1, characterized in that the base plate (42; 42') provided with at least one respective occupancy field (250; 255; 260; 300) and the headpiece (55; 55') arranged thereon and displaceable relative thereto together form a constructional unit.

10. Keyboard according to claims 1 to 10, characterized in that the headpiece (55; 55') is substantially knob-shaped in design and the contact face (56) shaped thereon is designed with outward curvature substantially corresponding to the internal hand surface of the hand (H).

## Revendications

1. Clavier pour commander un processeur coopérant avec le clavier, comportant au moins une pièce de tête (55) placée sur une plaque de base fixe, en pouvant coulisser par rapport à celle-ci, cette pièce de tête ayant une surface d'appui (56) pour la main (H) d'un utilisateur, sur sa face opposée à celle de la plaque de base, ainsi qu'un certain nombre de touches écartées les unes des autres au niveau de la surface d'appui (56) et qui peuvent être actionnées chacune par les doigts de la main (H), caractérisé en ce que la pièce de tête (55) comporte sur une face frontale (57) orientée sensiblement verticalement par rapport à la surface d'appui (56), un premier groupe de touches (G) comprenant les touches (60, 61, 62, 63) susceptibles d'être actionnées par les différents doigts de la main (H), ainsi que, sur une surface latérale (58, 58') orientée également de façon verticale par rapport à la surface d'appui (56), au moins une touche (65) actionnée par le pouce de la main (H), la pièce de tête (55) pouvant coulisser pour une occupation multiple des différentes touches (60, 61, 62, 63) dans plusieurs étapes (V) orientées dans la direction longitudinale de l'avant-bras de l'utilisateur, ainsi que dans différents pas (S) orientés transversalement par rapport à au moins un champ d'occupation (250 ; 255, 260, 300), subdivisé en différents champs (2-5) et associés à la plaque de base (42, 42'), de façon que les différents champs du champ d'occupation sollicité instantanément par la pièce de tête, puissent être activés par la commande de la touche respective.

2. Clavier selon la revendication 1, caractérisé en ce que le mouvement de coulissement (V et S) de la pièce de tête (55) par rapport aux champs d'occupation respectifs (250, 255, 260, 300) vers l'avant ou vers l'arrière et/ou transversalement, est subdivisé en plusieurs pas tramés (V1, V2, V3, V4 et S1, S2, S3), les différents champs (2-5) du champ d'occupation sollicité instantanément, sont activés par l'actionnement de la touche respective (60, 61, 62, 63) de la pièce de tête, de manière électro-optique, électromagnétique ou électromécanique.

3. Clavier selon la revendication 1, caractérisé en ce que la pièce de tête (55) comporte une pièce de détection (57') prévue sensiblement à l'équerre par rapport à la face frontale (57), et qui est munie, en correspondance avec le premier groupe de touches (G) prévu sur la face frontale (57), d'un second groupe de touches (G') avec plusieurs touches (60', 61', 62', 63').

4. Clavier selon les revendications 2 et 3, caractérisé en ce que chaque position de pas de la pièce de tête (55, 55') génère un signal électrique en fonction des différentes touches (60, 61, 62, 63 et 60', 61', 62', 63') actionnées suivant la position respective, ce signal étant converti par des moyens appropriés en une fonction numérique.

5. Clavier selon les revendications 1 à 3, caractérisé en ce que les différentes touches (60, 61, 62, 63 et 60', 61', 62', 63') du premier et du second groupes de touches (G et G') activent sur le champ d'occupation respectif (250, 255, 260, 300), des fonctions de lettres et/ou de chiffres ou encore des fonctions de symboles.

6. Clavier selon la revendication 1, caractérisé en ce que la pièce de tête (55) comporte sur sa face latérale (58, 58') associée au pouce de la main (H), une seconde touche (64) correspondant à la première touche (65).

7. Clavier selon les revendications 1 et 6, caractérisé en ce qu'à l'aide de la première et de la seconde touches (65, 64) de la pièce de tête (55, 55'), on actionne une fonction de commutation et une fonction de commutation à vide pour les différents champs (2-5) du champ d'occupation (250, 255, 260, 300), pour l'affichage de lettres, de chiffres ou de symboles.

8. Clavier selon la revendication 1, caractérisé en ce que le champ d'occupation (300) est subdivisé en deux parties (250 ; 250') distantes l'une de l'autre sur la plaque de base (42 ; 42') et coopérant avec une pièce de tête respective (50, 50').

9. Clavier selon la revendication 1, caractérisé en ce que la plaque de base (42, 42') munie chaque fois d'au moins un champ d'occupation (250, 255, 260, 300) ainsi que la pièce de tête (55, 55') coulissant par rapport au boîtier, forment un ensemble constructif.

10. Clavier selon les revendications 1 à 10, caractérisé en ce que la pièce de tête (55, 55') est sensiblement en forme de boule et la surface d'appui (56) qu'elle porte a sensiblement la forme de la surface intérieure de la main (H), en étant bombée vers l'extérieur.
